# EUROPEAN PATENT APPLICATION

(11) **EP 4 456 478 A1**
(43) Date of publication of application: **30.10.2024**
(21) Application number: 23170696.1
(22) Date of filing: 28.04.2023
(51) Int. Cl.: H04L 9/40, H04W 12/069, H04W 12/086, H04W 12/60

(54) **METHOD FOR OPERATING A USER EQUIPMENT WITH A TELECOMMUNICATIONS NETWORK AND/OR FOR COMMUNICATING BETWEEN OR FOR OPERATING AT LEAST TWO OF A PLURALITY OF NETWORK FUNCTIONS OR SERVICES OF THE TELECOMMUNICATIONS NETWORK OR OF A FURTHER TELECOMMUNICATIONS NETWORK, USER EQUIPMENT, SYSTEM OR TELECOMMUNICATIONS NETWORK, NETWORK ENTITY BEING USED AS A FIRST OR SECOND SPECIFIC NETWORK ENTITY, PROGRAM AND COMPUTER PROGRAM PRODUCT**

(71) Applicant: Deutsche Telekom AG, 53113 Bonn (DE)
(72) Inventor: COLOM IKUNO, Josep, 2100 Korneuburg (AT)
(74) Representative: Schwöbel, Thilo K.

(57) **Abstract**

The invention relates to a method for operating a user equipment with a telecommunications network and/or for communicating between or for operating at least two of a plurality of network functions or services of the telecommunications network or of a further telecommunications network, wherein control plane communication messages - exchanged between such different network entities of or connected to the telecommunications network or of or connected to the further telecommunications network - comprise a trust or security domain information,
wherein the telecommunications network and/or the further telecommunications network comprises or realizes at least a first and a second trust or security domain by means of
-- a first subset of the network entities, this first subset being associated or assigned to the first trust or security domain, and by means of
-- a second subset of the network entities, this second subset being associated or assigned to the second trust or security domain,

wherein in case of a first specific network entity transmitting a specific control plane communication message to a second specific network entity, the method comprises the following steps:
-- in a first step, the specific control plane communication message is transmitted, by the first specific network entity, wherein the control plane communication message comprises a specific trust or security domain information, the specific trust or security domain information being related to the specific trust or security domain to which the first specific network entity is associated or assigned,
-- in a second step, the specific control plane communication message is received, by the second specific network entity, wherein the specific trust or security domain information is verified by the second specific network entity.

## Description

### BACKGROUND

The present invention relates a method for operating a user equipment with a telecommunications network and/or for communicating between or for operating at least two of a plurality of network functions or services of the telecommunications network or of a further telecommunications network, wherein control plane communication messages are exchanged between such different network entities of or connected to the telecommunications network or of or connected to the further telecommunications network, wherein the telecommunications network and/or the further telecommunications network comprises or realizes at least a first and a second trust or security domain by means of a first subset of the network entities, this first subset being associated or assigned to the first trust or security domain, and by means of a second subset of the network entities, this second subset being associated or assigned to the second trust or security domain.

Furthermore, the present invention relates to a user equipment or to a mobile station for being operated with a telecommunications network and/or for communicating between or for operating at least two of a plurality of network functions or services of the telecommunications network or of a further telecommunications network, wherein control plane communication messages are exchanged between such different network entities of or connected to the telecommunications network or of or connected to the further telecommunications network, wherein the telecommunications network and/or the further telecommunications network comprises or realizes at least a first and a second trust or security domain by means of a first subset of the network entities, this first subset being associated or assigned to the first trust or security domain, and by means of a second subset of the network entities, this second subset being associated or assigned to the second trust or security domain.

Additionally, the present invention relates to a system or to a telecommunications network for operating a user equipment with the telecommunications network and/or for communicating between or for operating at least two of a plurality of network functions or services of the telecommunications network or of a further telecommunications network, wherein control plane communication messages are exchanged between such different network entities of or connected to the telecommunications network or of or connected to the further telecommunications network, wherein the telecommunications network and/or the further telecommunications network comprises or realizes at least a first and a second trust or security domain by means of a first subset of the network entities, this first subset being associated or assigned to the first trust or security domain, and by means of a second subset of the network entities, this second subset being associated or assigned to the second trust or security domain.

Furthermore, the present invention relates to a network entity being used as a first or second specific network entity of a system or telecommunications network according to the present invention or as a first or second specific network entity in a method according to the present invention.

Furthermore, the present invention relates to a program and to a computer-readable medium for operating, according to the inventive method, a user equipment with a telecommunications network and/or for communicating between or for operating at least two of a plurality of network functions or services of the telecommunications network or of a further telecommunications network.

In conventionally known telecommunications networks, typically a single trust domain exists or is implemented within an operator or within a telecommunications network - especially a mobile communication network - operated by the operator. While such an architecture typically simplifies operations, some approaches - e.g. the sharing of resources between operators, advanced methods of slicing, or the usage of networks that are becoming more decentralized - might be difficult to realize with a single trust domain per operator.

While the use of different trust domains is typically required in roaming situations, where - regarding a considered user equipment - the visited network (also called V-PLMN) and the home network (also called H-PLMN) (of that considered user equipment) are typically clearly located in different trust domains, the approach of using different trust domains might be quite complex to implement within a single telecommunications network.

Additionally, in conventionally known telecommunications networks, typically a layered approach to security is applied (e.g. described in 3GPP TS 33.501), where security (or security protocols; e.g. IPsec security protocols as specified in RFC-4301) is to be provided by the network layer.

This, however, means that an effective and efficient communication between network elements being located in different trust or security domains is rather impeded.

### SUMMARY

An object of the present invention is to provide a technically simple, effective and cost effective solution for operating a user equipment with a telecommunications network and/or for communicating between or for operating at least two of a plurality of network functions or services of the telecommunications network or of a further telecommunications network, wherein control plane communication messages are exchanged between such different network entities of or connected to the telecommunications network or of or connected to the further telecommunications network and wherein the telecommunications network and/or the further telecommunications network comprises or realizes at least a first and a second trust or security domain, each of which comprising, respectively, a subset of network entities. A further object of the present invention is to provide a corresponding user equipment, a corresponding system or telecommunications network, a corresponding network entity being used as a first or second specific network entity, and a corresponding program and computer-readable medium.

The object of the present invention is achieved by a method for operating a user equipment with a telecommunications network and/or for communicating between or for operating at least two of a plurality of network functions or services of the telecommunications network or of a further telecommunications network, wherein control plane communication messages - exchanged between such different network entities of or connected to the telecommunications network or of or connected to the further telecommunications network - comprise a trust or security domain information, wherein the telecommunications network and/or the further telecommunications network comprises or realizes at least a first and a second trust or security domain by means of
-- a first subset of the network entities, this first subset being associated or assigned to the first trust or security domain, and by means of
-- a second subset of the network entities, this second subset being associated or assigned to the second trust or security domain,
   wherein in case of a first specific network entity transmitting a specific control plane communication message to a second specific network entity, the method comprises the following steps:
-- in a first step, the specific control plane communication message is transmitted, by the first specific network entity, wherein the specific control plane communication message comprises a specific trust or security domain information, the specific trust or security domain information being related to the specific trust or security domain to which the first specific network entity is associated or assigned,
-- in a second step, the specific control plane communication message is received, by the second specific network entity, wherein the specific trust or security domain information is verified by the second specific network entity.

According to the present invention, it is advantageously possible to combine a (functional) communication exchange, on the control plane, with an awareness of the involved network nodes or network entities themselves of the trust or security domain-related properties of or assigned to these considered network nodes or network entities. It is thereby advantageously possible, according to the present invention, that parameters, identifiers or pieces of identifier information that are related to the trust or security domain situation (or the trust or security domain relationship) of a given or considered communication between two or more network nodes or network entities is reflected on the functional control plane communication such that control plane communication is able to be shaped dependent on such an existing trust or security domain situation or relationship between the considered (two or more) network nodes or network entities involved.

As already mentioned, in conventionally known telecommunications networks, typically a layered approach to security is applied, cf. 3GPP TS 33.501 and 3GPP TS 33.210:
This means that trust boundaries or trust zones may be realized by means of such networks being subdivided into trust zones, resulting in subnetworks being able to be in, or to relate to, different trust zones, wherein messages that traverse trust boundaries need to follow the requirements in sub-clause 5.9.2 of document 3GPP TS 33.501 (and if not protected end to end by NDS/IP as specified in TS 33.210).

Document 3GPP TS 33.210 (clauses 4.2 and 4.3) defines that IPsec security protocols are the method to use for segmenting networks; this means that for native IP-based protocols, security shall be provided at the network layer, namely IETF defined IPsec security protocols as specified in RFC-4301: The network domain control plane of an NDS/IP-network is sectioned into security domains and typically these coincide with operator borders. The border between the security domains is protected by security gateways (SEGs); the SEGs are responsible for enforcing the security policy of a security domain towards other SEGs in the destination security domain; a network operator may have more than one SEG in its network in order to avoid a single point of failure or for performance reasons, and a SEG may be defined for interaction towards all reachable security domain destinations or it may be defined for only a subset of the reachable destinations. Importantly, the network domain security of an NDS/IP-network does not extend (i.e. integrate) to the control plane and/or user plane but is rather in a separate, parallel, layer or plane associated with generic data transport rather than control and/or user plane (i.e. functionality), and consequently the security domains and the associated security gateways towards other domains do not encompass the user plane Gi-interface towards other, possibly external, IP networks. A chained-tunnel/hub-and-spoke approach may be used which facilitates hop-by-hop based security protection between security domains, and within a security domain the use of transport mode is allowed. However, all NDS/IP traffic needs to pass through a SEG before entering or leaving the security domain.

Hence, there is the need to deploy security gateways between trust domains in a separate layer, of which the functional plane is not aware, which is a result of the extension of the legacy trust architecture using a "trust bubble", such that communication between bubbles is realized by means of the security gateways.

Hence, a conventionally known telecommunications network can, in its simplest form (which is also common conventionally), be composed of a single trust domain, such that
- within a trust domain (sometimes commonly referred to as "security domain"; however, 3GPP TS 33.501, uses the term "security domain" to refer to a very specific set of security features) - network components assume that other network components can be trusted.

According to 3GPP TS 33.501 (especially clause 4.1), the following sets of security features (which also use the term "security domain", albeit with a different meaning) are specified:
-- network access security: the set of security features that enable a user equipment to authenticate and access services via the network securely, including the 3GPP access and Non-3GPP access, and in particularly, to protect against attacks on the (radio) interfaces; in addition, it includes the security context delivery from a secondary node (SN), e.g. a core network (CN) element, to an access network (AN) for the access security.
-- network domain security: the set of security features that enable network nodes to securely exchange signaling data and user plane data.
-- SBA (service based architecture) domain security: the set of security features that enables network functions of the SBA architecture to securely communicate within the serving network domain and with other network domains; such features include network function registration, discovery, and authorization security aspects, as well as the protection for the service-based interfaces.
-- visibility and configurability of security: the set of features that enable the user to be informed whether a security feature is in operation or not.
-- user domain security: the set of security features that secure the user access to mobile equipment.
-- application domain security: the set of security features that enable applications in the user domain and in the provider domain to exchange messages securely. Application domain security is out of scope of the present document.

Hence, the only approach to security applied in conventionally known telecommunications networks, is to use trust zones (and, hence, boundaries between them); however, solely a layered approach to security regarding communication that traverses such boundaries is used (i.e. using security gateways, SEGs).

The above-mentioned layered approach to security is also applied or used - in conventionally known telecommunications networks, especially according to the 3GPP- based architecture - for realizing roaming, e.g. home-routed roaming (according to 3GPP TS 23.501, clause 4.2.3) typically uses the secure edge protection proxy network function, SEPP NF, that serves as a security gateway, SEG, between the visited network (Visited PLMN, VPLMN) and the home network (Home PLMN, HPLMN) of a considered user equipment.

According to the present invention, a user equipment is operated with a telecommunications network and/or communication is performed between at least two of a plurality of network functions or services of the telecommunications network or of a further telecommunications network. In view thereof - and also in accordance to implementations in conventionally known telecommunications networks -, control plane communication messages are exchanged between such different network entities of or connected to the telecommunications network or of or connected to the further telecommunications network.

Likewise according to implementations in conventionally known telecommunications networks, such networks may typically be divided in two main parts: the (radio) access network (AN) and the core network (CN), both forming - together with the user equipment - a 3GPP telecommunications network, e.g. a 5G system, wherein the user equipment is connected with the radio access network, and the radio access network is connected to the core network; in this context, the objective is typically to provide the user equipment with connectivity towards a data network (DN). The user equipment communicates with the radio access network via a radio interface (or air interface), which is used for conveying both signaling information and data traffic; even though there is a logical separation (logical channels), for obvious reasons both types of data (control plane data and user plane data) end up being transmitted over the same physical medium, i.e. the radio interface. Between the radio access network and the core network, signaling information and user data are separated in different interfaces or reference points: N1/N2 and N3 in the 5G case, the former running on a SCTP/NG-AP/NAS protocol stack and the latter running on a UDP/GTPU-U protocol stack.

According to the present invention, the control plane communication messages (exchanged between such different network entities of or connected to the telecommunications network or of or connected to the further telecommunications network) comprise a trust or security domain information:
The telecommunications network and/or the further telecommunications network comprises or realizes at least a first and a second trust or security domain by means of a first subset and a second subset of the network entities, wherein the first subset is associated or assigned to the first trust or security domain, and wherein the second subset is associated or assigned to the second trust or security domain.

Among the plurality of network entities (or network functions or services) of the telecommunications network, the first subset of such network entities and the second subset of such network entities might cover all network entities (of the telecommunications network) or, alternatively, only a part thereof. Furthermore, and independently thereof, the first subset and the second subset of such network entities might be disjoint (i.e. non-overlapping), or, alternatively, there might be one network entity (or even a plurality of network entities, i.e. a plurality of network functions or services) that is/are both part of the first and of the second subset of such network entities, i.e. such a network entity (or such a plurality thereof) would be part of both the first and of the second trust or security domain.

According to the present invention, in case of a first specific (i.e. considered) network entity transmitting a specific (considered) control plane communication message to a second specific (i.e. considered) network entity, the method comprises the following steps:
-- in a first step, the specific control plane communication message is transmitted, by the first specific network entity, wherein the specific control plane communication message comprises a specific trust or security domain information, the specific trust or security domain information being related to the specific trust or security domain to which the first specific network entity is associated or assigned (or even to a plurality thereof),
-- in a second step, the specific control plane communication message is received, by the second specific network entity, wherein the specific trust or security domain information is verified by the second specific network entity.

Hence, according to the present invention, it is advantageously possible to not only allow mobile telecommunications networks to be composed of multiple trust/security domains (or to be divided up in at least a first and a second trust or security domain, but potentially also in more than just two trust or security domains), but also allow network elements in different trust or security domains within a telecommunications network to communicate with each other effectively and efficiently.

Thereby, it is advantageously possible, according to the present invention, to make use of multiple security/trust domains within one telecommunications network (or a plurality of telecommunications networks) by means of allowing network elements (or first specific network entities) to signal their associated trust domain and for other entities (or second specific network entities) to verify the trust domain association of the other network elements (or network entities) from which those trust domain information (or trust or security domain information) has been received. Of course, the roles of first and second specific network entities are able to be reversed as well, i.e. a (specific) network entity A that is transmitting its trust or security domain information acts as the first specific network entity, and a (specific) network entity B that is receiving a control plane communication message (comprising trust or security domain information related to network entity A) acts as the second specific network entity; and these roles are susceptible to be switched in case that the trust or security domain information related to network entity B is transmitted (by network entity B, then acting as the first specific network entity) and received (by network entity B, then acting as the second specific network entity).

Hereby, it is thus possible that by associating different parts of the network to different trust domains, different parts within a network can be operated by different entities which may not fully trust each other in a secure manner, such as a customer of a network operator operating certain parts of an operator network.

Especially according to the present invention, it is advantageously possible to enhance the usage of network slices in a manner such that either "untrusted network slices" are able to be created or network slices having a different or alternative trust level or trust association (i.e. network slices within a network belonging to a different trust or security domain). This especially and advantageously provides the possibility to allow for a more dynamic sharing of resources with third parties such as non-operator networks and services, as well as with other operators (e.g. network federation). Especially, this allows the possibility of the slice user to achieve a greater control over the slice itself, thus acting as a slice owner operating the components associated to that part of the network (which are associated to a trust domain or trust domains under the control of the customer), whereas the network elements outside of the slice, that is the rest of the network operator's network wherein the slice is deployed is not part of the same trust domain. Furthermore, it is subsequently possible for the customer to establish additional trust domains within said trust domain, with the goal of further dividing the trust domain, e.g. to not-fully-trusted third parties.

According to the present invention, it is advantageously possible and preferred that the specific control plane communication message comprises the trust or security domain information on a functional layer, especially in a manner such that the trust or security domain information is visible among the different network entities of or connected to the telecommunications network or of or connected to the further telecommunications network,
wherein especially the trust or security domain separation of the first subset of the network entities - of the first trust or security domain - and of the second subset of the network entities - of the second trust or security domain - is visible at the functional level such that the network entities involved are aware of the trust or security domain the respective other network entity belongs to,
wherein especially the trust or security domain information is used in such a manner instead of in a separated layer managed on a network layer of the telecommunications network or of the further telecommunications network.

It is thereby advantageously possible to realize and implement the inventive method in a comparatively simple and efficient manner: By means of using the trust or security domain information on the functional layer and/or visible among the different, communicating network entities such that these are aware of the trust or security domain of the respective other network entities, it is advantageously possible, according to the present invention, to beneficially integrate such visibility or such awareness in the communication between the different network entities.

According to the present invention, it is furthermore advantageously possible and preferred that regarding the specific trust or security domain information - of or as part of the specific control plane communication message transmitted by the first specific network entity - at least one of the following applies:
-- the specific trust or security domain information comprises or corresponds to authentication information and/or authorization information, especially using oauth token information, http header information, the message payload,
-- the specific trust or security domain information comprises or corresponds to a common trust or security domain identifier information, especially a string, a number, a binary array, an authorization token, a public key information associated to a private key information,
-- the specific trust or security domain information comprises or corresponds to a certificate or information derived of a certificate, shared over the trust or security domain,
-- the specific trust or security domain information comprises or corresponds to an information pointing to the location of the actual authentication information and/or authorization information, especially in a database and/or repository, located in an external entity and/or in a distributed ledger,
-- the specific trust or security domain information comprises or corresponds to information related to the first specific network entity itself, especially its own certificate and/or signing it with its own private key,
-- the specific trust or security domain information is part of or is integrated into a network slice identifier information
-- the specific trust or security domain information is derived from any or a combination of any the above.

Furthermore, it is advantageously possible and preferred according to the present invention that the specific trust or security domain information is associated to a trust level information, such that it can be compared whether different trust domains can be equivalently trusted and/or specific operations can be allowed between given combinations of trust domains (e.g. other trust domains can use existing resources not request new ones), such that a more granular verification of specific trust or security domain information is performed.

Furthermore, it is advantageously possible and preferred according to the present invention that a network entity is configured to assign network entities not signaling trust or security domain information to a default trust domain.

It is thereby advantageously possible to realize and implement the inventive method in a comparatively simple and efficient manner.

Furthermore, it is advantageously possible and preferred according to the present invention that the verification, in the second step and by the second specific network entity, of the specific trust or security domain information involves at least one out of the following:
-- a general verification policy or general authorization settings applied within the trust or security domain of the second specific network entity,
-- a specific verification policy or specific authorization settings applied by the second specific network entity, the specific verification policy or specific or authorization settings being different from the general verification policy applied within the trust or security domain of the second specific network entity,
-- a communication of the second specific network entity with a specific trust or security domain controller entity of the trust or security domain of the second specific network entity, wherein the specific trust or security domain controller entity verifies the validity and authenticity of the specific trust or security domain information, wherein especially the specific trust or security domain controller entity verifies the validity of the specific trust or security domain information and/or wherein especially the specific trust or security domain controller entity verifies the association of the first specific network entity to a specific trust domain.

Furthermore, it is advantageously possible and preferred according to the present invention that if the specific trust or security domain information is associated to a trust level information, the verification additionally considers the trust level information, such that, e.g. only specific operations and/or operation types are allowed or verified between specific trust domains a more granular verification of specific trust or security domain information is performed.

It is thereby advantageously possible to realize and implement the inventive method in a comparatively simple and efficient manner.

Furthermore, it is advantageously possible and preferred according to the present invention that the specific control plane communication message corresponds to a service request message being transmitted - during the first step - by the first specific network entity acting as a service consumer network entity and received - during the second step - by the second specific network entity acting as a service provider network entity.

It is thereby advantageously possible to realize and implement the inventive method in a comparatively simple and efficient manner.

Furthermore, it is advantageously possible and preferred according to the present invention that the specific control plane communication message transmitted - during the first step - by the first specific network entity corresponds to a registration message and wherein the specific control plane communication message received - during the second step - by the second specific network entity corresponds to a retrieving message, the registration message being transmitted, by the first specific network entity, towards a trust or security domain controller entity, and the retrieving message being received, by the second specific network entity, from the trust or security domain controller entity,
wherein especially the trust or security domain controller entity is or corresponds to a network repository function, wherein the network repository function stores an association between the first specific network entity and a trust or security domain or a trust or security domain identifier information.

It is thereby advantageously possible to realize and implement the inventive method in a comparatively simple and efficient manner.

Furthermore, it is advantageously possible and preferred according to the present invention that the first specific network entity is or corresponds to a user equipment or mobile station and wherein the second specific network entity is or corresponds to a network function or service of the telecommunications network or of the further telecommunications network, or wherein the second specific network entity is or corresponds to a user equipment or mobile station and wherein the first specific network entity is or corresponds to a network function or service of the telecommunications network or of the further telecommunications network, or wherein the first specific network entity is or corresponds to a network function or service of the telecommunications network or of the further telecommunications network and wherein the second specific network entity is or corresponds to a further network function or service of the telecommunications network or of the further telecommunications network, wherein especially the specific trust or security domain information is stored in the user equipment or mobile station, used as the first specific network entity, wherein the specific trust or security domain information is used in order for the telecommunications network or the further telecommunications network providing communication services to the user equipment or mobile station,
wherein especially the specific trust or security domain information is used, by the user equipment or mobile station,
-- during a registration procedure of the user equipment or mobile station with the telecommunications network or the further telecommunications network, especially towards an access and mobility management function serving as second specific network entity, and/or
-- during a packet data unit session establishment procedure of the user equipment or mobile station with the telecommunications network or the further telecommunications network, especially towards a session management function serving as second specific network entity, and/or
-- during a traffic flow establishment procedure - in view of serving the user equipment or mobile station and especially a GTP-U tunnel establishment procedure - of a first network function or service and a second network function or service, especially between two session management functions instructing two or more a user plane functions to setup a GTP-U tunnel, and/or towards a session management function serving as second specific network entity, and/or
-- during a network selection procedure of the user equipment or mobile station with a specific base station entity of the telecommunications network or the further telecommunications network, the specific base station entity serving as second specific network entity and/or
-- during a network slice selection or association procedure of the user equipment or mobile station with a specific access and mobility management function regarding a network slice, the specific access and mobility management function serving as second specific network entity.

It is thereby advantageously possible to realize and implement the inventive method in a comparatively simple and efficient manner.

Furthermore, the present invention relates to a user equipment or to a mobile station for being operated with a telecommunications network and/or for communicating between or for operating at least two of a plurality of network functions or services of the telecommunications network or of a further telecommunications network, wherein control plane communication messages - exchanged between such different network entities of or connected to the telecommunications network or of or connected to the further telecommunications network - comprise a trust or security domain information,
wherein the telecommunications network and/or the further telecommunications network comprises or realizes at least a first and a second trust or security domain by means of
   -- a first subset of the network entities, this first subset being associated or assigned to the first trust or security domain, and by means of
   -- a second subset of the network entities, this second subset being associated or assigned to the second trust or security domain,
wherein in case of the user equipment or mobile station being used as a first or second specific network entity, the first specific network entity transmitting a specific control plane communication message to the second specific network entity, the user equipment or mobile station is configured such that:
   -- the specific control plane communication message is transmitted, by the first specific network entity, wherein the specific control plane communication message comprises a specific trust or security domain information, the specific trust or security domain information being related to the specific trust or security domain to which the first specific network entity is associated or assigned,
   -- the specific control plane communication message is received, by the second specific network entity, wherein the specific trust or security domain information is verified by the second specific network entity.

Furthermore, the present invention relates to a system or to a telecommunications network for operating a user equipment with the telecommunications network and/or for communicating between or for operating at least two of a plurality of network functions or services of the telecommunications network or of a further telecommunications network, wherein control plane communication messages - exchanged between such different network entities of or connected to the telecommunications network or of or connected to the further telecommunications network - comprise a trust or security domain information,
wherein the telecommunications network and/or the further telecommunications network comprises or realizes at least a first and a second trust or security domain by means of
   -- a first subset of the network entities, this first subset being associated or assigned to the first trust or security domain, and by means of
   -- a second subset of the network entities, this second subset being associated or assigned to the second trust or security domain,
wherein in case of a first specific network entity transmitting a specific control plane communication message to a second specific network entity, the system or telecommunications network is configured such that:
   -- the specific control plane communication message is transmitted, by the first specific network entity, wherein the specific control plane communication message comprises a specific trust or security domain information, the specific trust or security domain information being related to the specific trust or security domain to which the first specific network entity is associated or assigned,
   -- the specific control plane communication message is received, by the second specific network entity, wherein the specific trust or security domain information is verified by the second specific network entity.

Furthermore, the present invention relates to a network entity being used as a first or second specific network entity of an inventive system or telecommunications network or as a first or second specific network entity in an inventive method.

Additionally, the present invention relates to a program comprising a computer readable program code which, when executed on a computer and/or on a user equipment and/or on a first specific network entity of a telecommunications network and/or on a second specific network entity of a telecommunications network, or in part on the user equipment and/or in part on a first specific network entity of a telecommunications network and/or in part on a second specific network entity of a telecommunications network, causes the computer and/or the user equipment and/or the first specific network entity of the telecommunications network and/or the second specific network entity of the telecommunications network to perform the inventive method.

Additionally, the present invention relates to a computer-readable medium comprising instructions which when executed on a computer and/or on a user equipment and/or on a first specific network entity of a telecommunications network and/or on a second specific network entity of a telecommunications network, or in part on the user equipment and/or in part on a first specific network entity of a telecommunications network and/or in part on a second specific network entity of a telecommunications network, causes the computer and/or the user equipment and/or the first specific network entity of the telecommunications network and/or the second specific network entity of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, together with a further telecommunications network, wherein the core network of the telecommunications network comprises a number of network functions or services as part of different trust or security domains, each such trust or security domain comprising, respectively, a subset of the network functions or services.
Figure 2 schematically illustrates an example showing the architecture of a telecommunications network comprising different network slices as well as different trust or security domains according to the present invention.
Figure 3 schematically illustrates an example of the telecommunications network comprising different trust or security domains.
Figure 4 schematically illustrates a communication diagram showing an exemplary communication between different network functions or services taking into account their respective trust or security domain and/or trust or security domain information.
Figure 5 schematically illustrates a communication diagram showing an exemplary communication between different network functions or services taking into account their respective trust or security domain and/or trust or security domain information, wherein a trust or security domain controller entity is involved.
Figure 6 schematically illustrates a communication diagram showing an exemplary communication between different network functions or services taking into account their respective trust or security domain and/or trust or security domain information, wherein a network repository function is involved.
Figure 7 schematically illustrates a communication diagram showing an exemplary communication between a user equipment and different network functions or services wherein trust or security domain information stored in the user equipment is used for different procedures.
Figure 8 schematically illustrates a communication diagram showing an exemplary communication between a user equipment and different base station entities wherein trust or security domain information is used for network selection.
Figure 9 schematically illustrates a communication diagram showing an exemplary communication between a user equipment and different network functions or services wherein trust or security domain information is used for an association of the trust or security domain and the network slice.
Figure 10 schematically illustrates the architecture of a conventionally known telecommunications network comprising different network slices on a functional layer of the telecommunications network as well as different trust or security domains, wherein the coordination of the different trust or security domains occurs on a network layer.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

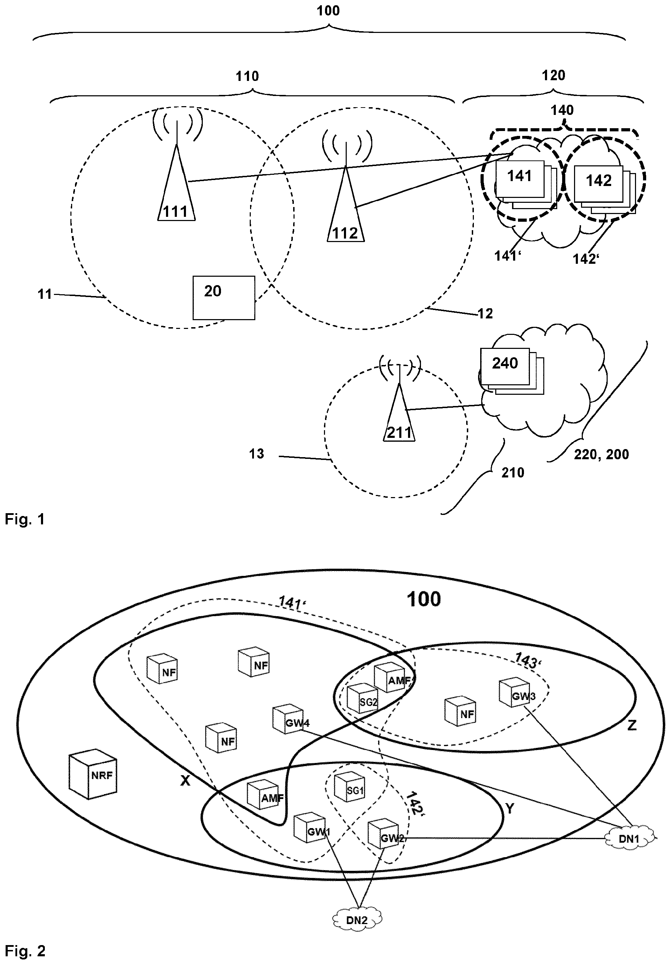

In Figure 1, a telecommunications network 100 comprising an access network 110, and a core network 120 is schematically shown. In Figure 1, the telecommunications network 100 is schematically shown as a mobile communication network 100, typically a cellular mobile communication network 100. However, the telecommunications network 100 might also be realized - at least in part - as a fixed-line telecommunications network 100 (not shown). The telecommunications network 100, especially the core network 120, typically comprises a number of network functions or services 140. Among the network functions or services 140, there might be different (kinds of) network functions or services, i.e. network functions or services providing different network function functionalities, such as, e.g., the access and mobility management function (AMF), the session management function (SMF), the policy and charging function (PCF), and the location management function (LMF). The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 (or mobile station) is schematically shown, in Figure 1, as part of or within the radio coverage area of the first radio cell 11/first base station entity 111.

The user equipment 20 or mobile station is typically, but not necessarily, mobile i.e. able to move with respect to the (typically, but not necessarily, static) radio cells 11, 12 or corresponding base station entities 111, 112 of the access network 110 of the telecommunications network 100. In the exemplarily represented illustration of Figure 1, the core network 120 of the telecommunications network 100 comprises a plurality of network functions or services 140.

Furthermore, Figure 1 schematically shows a further telecommunications network 200, the further telecommunications network 200 likewise being represented as a further mobile communication network 200, comprising a further access network 210 and a further core network 220, and comprising - exemplarily - a further radio cell 13 with a further base station entity 211. The further telecommunications network 200, especially the further core network 220, typically also comprises a number of further network functions or services 240. Among the further network functions or services 240, there might be different kinds of network functions or services, i.e. network functions or services providing different network function functionalities analogous to the scenario of the telecommunications network 100.

Hence, there are a number of network entities - the user equipment 20 or the plurality of user equipments, the network nodes of the radio access network 110, such as the base station entities 111, 112, and also the network functions or services 140 that are typically associated to or located in the core network 120 of the telecommunications network 100, as well as the network entities of or associated to the further telecommunications network 200.

All, or almost all, of these network entities - either as part of the telecommunications network 100, or, at least, connected to the telecommunications network 100, or as part of the further telecommunications network 200 - are at least able to transmit and to receive (i.e. to exchange) control plane communication messages.

According to the present invention, it is possible to define - within a telecommunications network, and, for the sake of example, the telecommunications network 100 is mainly considered here - a first trust or security domain and at least a second trust or security domain. Regarding the telecommunications network 100, this is exemplarily represented, in Figure 1, by means of the network functions or services 140 of the telecommunications network 100 being grouped (indicated by means of dashed circles) into a first trust or security domain 141' and a second trust or security domain 142'. The first trust or security domain 141' comprises a first subset 141 of network functions or services 140, and the second trust or security domain 142' comprises a second subset 142 of network functions or services 140 (in this exemplary case, of the telecommunications network 100).

According to all embodiments of the present invention, the control plane communication messages (that are exchanged between the different network entities of or connected to the telecommunications network 100 or of or connected to the further telecommunications network 200) comprise a trust or security domain information, and this trust or security domain information indicates (or is related to) the trust or security domain of the respective network entity that transmits a considered (specific) control plane communication message.

Hence, regarding a first specific (considered) network entity transmitting a specific (considered) control plane communication message to a second specific (considered) network entity, according to the present invention, the specific control plane communication message is transmitted, by the first specific network entity, and the specific control plane communication message comprises a specific trust or security domain information, the specific trust or security domain information being related to the specific trust or security domain to which the first specific network entity is associated or assigned. In a subsequent second step, the specific control plane communication message is received, by the second specific network entity, wherein the specific trust or security domain information is verified by the second specific network entity.

Especially, it is preferred according to the present invention that the specific control plane communication message (considered regarding its transmission from the first specific (considered) network entity to the second specific (considered) network entity, and regarding its processing (or verification) by the second specific network entity) comprises the trust or security domain information on a functional layer, especially in a manner such that the trust or security domain information is visible among the different network entities of or connected to the telecommunications network 100 or of or connected to the further telecommunications network 200. It is thereby advantageously possible, according to the present invention, that the trust or security domain separation of the first subset 141 of the network entities 140 - i.e. of the first trust or security domain 141' - and of the second subset 142 of the network entities 140 - of the second trust or security domain 142' - is visible at the functional level, i.e. such that the network entities 140 involved are aware of the trust or security domain 141', 142' the respective other network entity belongs to.

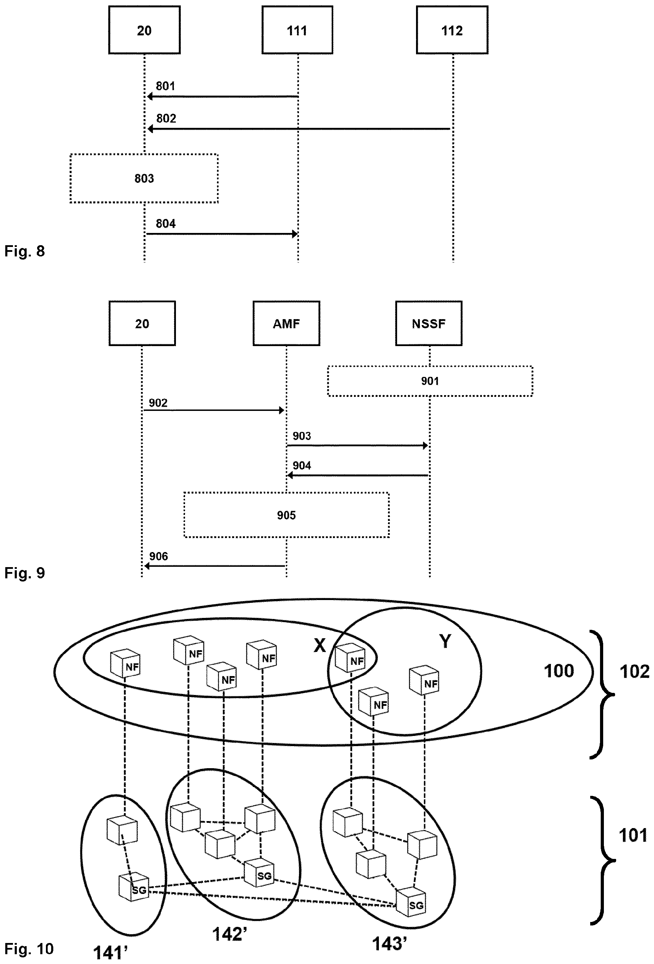

This is in contrast to the realization of architecture of trust or security separation in conventionally known telecommunications networks: Figure 10 schematically shows such an example of such a conventionally known architecture realized in a telecommunications network 100 comprising different network slices X, Y on a functional layer 102 of the telecommunications network as well as different trust or security domains 141', 142', 143', wherein the coordination of the different trust or security domains 141', 142', 143' occurs on a network layer 101.

As part of the telecommunications network 100 (that is implementing trust boundaries or trust zones according to a conventionally known architecture), a number of network functions or services exist that are designated, in Figure 10, by means of reference sign NF, and such network functions or services NF are organized (or grouped) in different network slices X, Y (with the possibility of an overlap, i.e. a network function or service belonging to both network slice X and as well to network slice Y). However, the implementation of trust boundaries or trust zones is realized on a completely different layer (i.e. network layer 101): This means that trust boundaries or trust zones may be realized by means of the telecommunications network 100 being subdivided into trust zones 141', 142', 143', resulting in subnetworks being able to be in, or to relate to, different trust zones, wherein messages that traverse trust boundaries are handled differently from messages transmitted within a trust zone. Such messages traversing trust boundaries need to be handled by security gateways (SEGs), which exist in the network layer, that are schematically indicated, in Figure 10, by means of reference sign SG: Each trust zone 141', 142', 143' comprises such a security gateway SG, and the security gateways SG are responsible for enforcing the security policy of a security domain towards other SEGs in the destination security domain, and there may be more than one security gateway SG in a trust zone 141', 142', 143' in order to avoid a single point of failure or for performance reasons.

Hence, according to such a conventionally known architecture, the coordination of the different trust or security domains 141', 142', 143' occurs on the network layer 101 which is different from the functional layer 102 on which control plane communication messages are exchanged, resulting in the involved network nodes or network entities not being aware of the trust or security domain-related properties of or assigned to these considered network nodes or network entities.

Hence, in conventionally known telecommunications networks, due to the fact that any trust domain separation, as well as related information, is hidden from upper layers (i.e. the functional layer 102) and provided by the networking (or network) layer 101, security gateway functionality is hidden from upper layers by design; this results in the division of the different layers 101, 102 and the placement of security gateway (SEG) functionality in the network layer 101. This approach historically maps physical connectivity, wherein different, physically separated networks were interconnected by physical gateways, using specific physical connections for specific purposes.

In contrast to the conventionally known architecture shown in Figure 10, Figure 2, schematically illustrates an example showing the architecture, according to the present invention, of a telecommunications network 100 comprising different network slices X, Y, Z as well as different trust or security domains 141', 142', 143'. Again, the telecommunications network 100 comprises a number of network functions or services that are designated, also in Figure 2, by means of reference sign NF or by the respective abbreviation such as AMF for access and mobility management function or NRF for network repository function. Again, such network functions or services are organized (or grouped) in different network slices, three of which, X, Y, Z are exemplarily represented in Figure 2 (again with the possibility of an overlap, i.e. a network function or service, e.g. AMF, belonging, e.g., to both a network slice X and as well to a network slice Y). In contrast to the conventionally known architecture shown in Figure 10, Figure 2 shows the implementation of trust boundaries or trust zones on a functional layer. Besides the network functions or services NF, AMF, NRF, a certain number of gateway functionalities, GW1, GW2, GW3, GW4 assure connectivity of the respective network slices X, Y, Z and/or of the respective trust domains 141', 142', 143' to data networks DN1, DN2.

Additionally, also a number of security gateways (SEGs) SG1 and SG2 are schematically shown as part of the telecommunications network 100. According to the present invention, it is advantageously possible to integrate the SEG functionality - that is typically provided at the network layer only, cf. reference sign 101 in Figure 10, and hence invisible to the network functions or services - into the functional layer, resulting in the security gateways SEGs being realized as a multi-trust-domain network function or service with routing capability (i.e. considering the trust or security domain information as an additional dimension in the network design); thus, it is possible to consider the trust or security domain information (and how to reach a given trust domain's network functions or services) into the network function or service logic, especially the native communication logic of the network functions or services; this advantageously allows for additional use cases compared to the layered approach in conventionally known telecommunications networks.

Especially, the following use cases are considered:
-- When establishing a PDU session for network slice Y (even if different network slices are being served to a user equipment, there is a single access and mobility management function AMF serving a user equipment, which supports all of the network slices being served to the user equipment) to reach a specific data network, e.g. DN2, the access and mobility management function AMF can be aware that GW2, albeit also part of the same network slice Y, is managed by a different entity (i.e. having a different trust or security domain 142' instead of trust or security domain 141') and take this into account, e.g. resulting in not establishing an IMS session via the second trust or security domain 142'.
-- The network level or PLMN-level network repository function NRF can be used to provide routing information, so that a NF in trust or security domain 142' (e.g. GW2) can be made aware that in order to reach a network function or service NF in network slice Z (registered NF profiles can be queried via the PLMN-level NRF), signaling will need to traverse trust or security domain 141'.
-- A user equipment connected to the telecommunications network 100 can be made aware that although the signaling will anyhow have to go via the PLMN operator, in order to reach data network DN1, it has three options it can choose from based on local policies (e.g. trust domain 2 belongs to an enterprise the UE's owner has forbidden to route traffic through):
-- send the user plane data via the PLMN operator,
-- send the user plane via trust or security domain 143',
-- send the data via trust or security domain 142' (e.g. triggers a network slice reassignment and an AMF redirection between the two AMFs).

Awareness of this information does allow the telecommunications network 100 to more flexibly and knowledgeably route traffic between network functions or services and/or networks.

Especially according to the present invention, it is possible that the mapping between slices X, Y, Z and trust or security domains 141', 142', 143' is 1:1 (i.e. a trust or security domain 141', 142', 143' corresponds to a network slice X, Y, Z and vice versa), or, alternatively that such mapping is also able to go beyond network slices X, Y, Z, as well as to be within a network slice X, Y, Z, as shown in Figure 2.

Hence, the solution according to the present invention is based on the association of one or more network components (or network entities) - e.g. network functions or services, radio access network element and/or user equipment or mobile station - to one or more trust (or security) domains. This allows to group (network) entities in different trust (or security) domains 141', 142', 143' on a functional level visible within the, e.g. 5GC, network - instead of as a separated layer managed at network layer. The trust/security domain separation is visible at the functional level, that is, when elements within the network (or network entities) communicate with each other, they are aware of the trust domain the other network element belongs to.

Enabling a trust-domain-aware telecommunications network is advantageous, but a necessary feature is to provide controlled interconnection capabilities between trust domains.

While the current paradigm where the network layer provides separation between administrative domains can be used, it does not enable upper layers to take into consideration application-level information to communicate with NFs in other trust domains.

Specific network functions or services can be associated to multiple trust domains, i.e. the trust or security domains are able to overlap (or there can be network function or service, or network entities, that belong to both a first trust or security domain and to a second trust or security domain.

In such a case, network functions or services in the same trust or security domains are able to communicate but network functions or services in different trust or security domains cannot communicate with each other (due to being in different trust or security domains).

Via the association of a special network function or service simultaneously to trust or security domain A and trust or security domain B and the registration of its gateway capability, such a special network function or service can be discovered in both trust or security domains A and B (e.g. via NRF and NF profile), hence providing a network function or service in trust or security domain A the possibility to route its message request via the special network function or service so that it can reach a network function or service that is part of trust or security domain B.

Furthermore, the trust or security domain B is able to be configured such that only transit messages of specific foreign trust domains are allowed, i.e. traffic only between gateway functionality and not from other network functions or services so that network functions or services (except gateways) within the considered trust or security domain cannot be accessed by network functions or services in other trust domains.

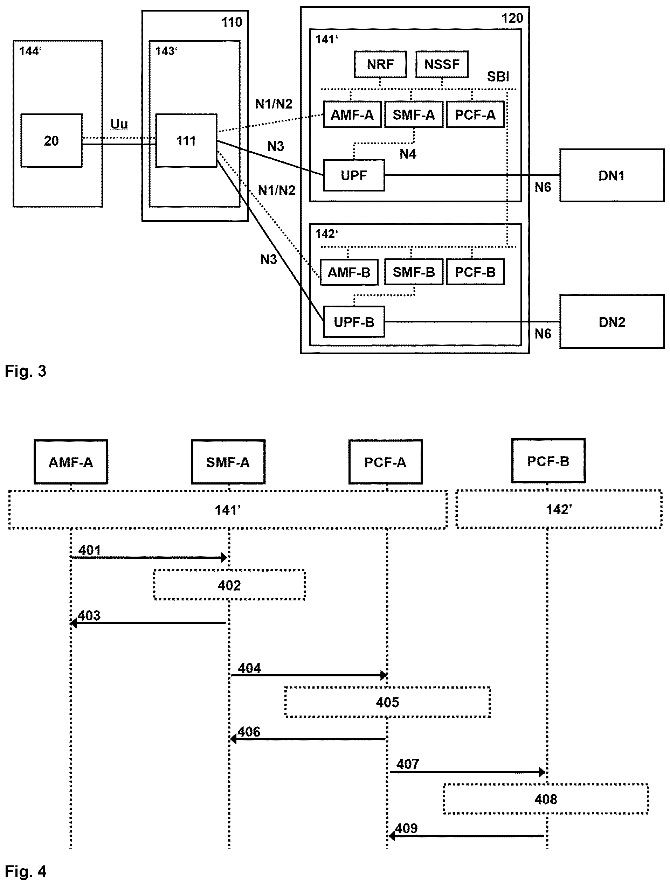

Figure 3 schematically illustrates an example of the inventive telecommunications network 100 comprising different trust or security domains 141', 142', 143', 144' among the plurality of its network entities, wherein - by means of trust or security domain information (and, hence, the trust or security domain separation of the first subset 141 of network entities (first trust or security domain 141') and of the second subset 142 of the network entities (second trust or security domain 142')) being visible on a functional layer - such network entities are aware of the trust or security domain 141', 142', 143', 144' the respective other network entity (of the considered exchange of control plane communication messages) belongs to.

Exemplarily, Figure 3 shows an example where the telecommunications network 100 comprises, exemplarily as part of the core network 120, the first trust or security domain 141' (comprising the first subset 141 of network entities), and the second trust or security domain 142' (comprising the second subset 142 of network entities). Furthermore exemplarily, the radio access network 110 constitutes a third trust or security domain 143', comprising the (first) base station entity 111 (or a plurality of base station entities (not specifically shown)) as a network entity or network entities (i.e. as a third subset 143 of network entities), and, furthermore exemplarily, a fourth trust or security domain 144' only comprises the user equipment 20 (or a plurality of user equipments) as a network entity or network entities (i.e. as a fourth subset 144 of network entities).

In a manner conventionally known:
-- the user equipment 20 is connected to the (first) base station entity 111 via a Uu interface or reference point;
-- the (first) base station entity 111 is connected to a first access and mobility management function (AMF-A) of the first trust or security domain 141' via an N1/N2 interface or reference point and to a second access and mobility management function (AMF-B) of the second trust or security domain 142' via likewise an N1/N2 interface or reference point;
-- furthermore, the (first) base station entity 111 is connected to a first user plane function (UPF-A) of the first trust or security domain 141' via an N3 interface or reference point and to a second user plane function (UPF-B) of the second trust or security domain 142' via likewise an N3 interface or reference point,
-- a first data network DN1 is connected to the first user plane function (UPF-A) via an N6 interface or reference point, and, likewise, a second data network DN2 is connected to the second user plane function (UPF-B) via an N6 interface or reference point.

Schematically and exemplarily, Figure 3 shows the first trust or security domain 141' comprising, besides the first access and mobility management function (AMF-A) and the first user plane function (UPF-A), a first session management function (SMF-A), and a first policy and charging function (PCF-A), wherein the first session management function (SMF-A) and the first user plane function (UPF-A) are connected via an N4 interface or reference point as part of the first trust or security domain 141'. Likewise schematically and exemplarily, Figure 3 shows the second trust or security domain 142' comprising, besides the second access and mobility management function (AMF-B) and the second user plane function (UPF-B), a second session management function (SMF-B), and a second policy and charging function (PCF-B), wherein, likewise, the second session management function (SMF-B) and the second user plane function (UPF-B) are connected via an N4 interface or reference point as part of the second trust or security domain 142'.

Additionally, the core network 120 of the telecommunications network 100 schematically and exemplarily represented in Figure 3 also comprises a network repository function (NRF) and a network slice selection function (NSSF) to which the first and second access and mobility management functions (AMF-A, AMF-B), the first and second session management functions (SMF-A, SMF-B), and the first and second policy and charging function (PCF-A, PCF-B) are connected via a service based infrastructure (SBI).

According to the present invention, the following technical problems are able to be tackled following the inventive approach:
-- By having (or using) the trust domain information (i.e. the trust or security domain information, i.e. an identifier information identifying to which trust or security domain a network entity belongs) on a different layer (as is the case in conventionally known telecommunications networks), it is not possible to combine trust domain information with network slicing (information) in a flexible manner, e.g. to associate a given network slice to a given trust domain and make other network elements aware of this association when querying slice information;
-- It is currently not possible to group and identify elements that are trusted, and as a result, it is not possible to restrict and/r filter network element discovery, e.g. NF discovery of trusted NFs by means of the NRF, query whether a given target NF belongs in the same trust domain;
-- It is currently not possible to steer mobility of user equipments, e.g. between cells, such that mobility is restricted to especially-trusted RAN elements or given trust domains are avoided, e.g. implementing regulatory requirements such that a service can be offered end-to-end in a trust-domain-aware way or allowing to differentiate the trustfulness of different network element operators;
-- When establishing control plane connections (e.g. HTTP-based signaling such as using the service based architecture (SBI) in the 5GC), it is not possible to perform authorization (i.e. what service procedures each network function is allowed to perform) based on what trust domain a given network function belongs to;
-- When roaming, all signaling pertaining to a given PLMN ID is treated equally; by adding (verifiable) trust domain information, it can be ensured that only certain, especially trusted communications are allowed on roaming interfaces;
-- Current protocol stacks such as HTTP, HTTP/2 can make extensive use of proxies, service meshes and similar forwarding mechanisms; it is thus not reliable to rely on origin/destination headers in data packets for ascertaining the requester of a control plane message; furthermore, it is preferrable to include authentication/authorization information within the control message itself (e.g. via Oauth tokens, HTTP headers or within the message payload).

In the following, different applications are detailed of using signaling of trust domains (or trust or security domain information) in order for network signaling to realize advantageous outcomes, especially according to the following use cases:
-- Apply authorization/security based on the requestee's trust domain;
-- Deployment of untrusted slices (i.e. a slice belonging to a trust domain different to the operator's)
-- Registration within a 5G network of Security Gateways bridging between trust domains.

The considered possible nature of the trust/security domain information stored in a network element (or network entity) are:
-- A common (shared over the trust domain) trust domain identifier, e.g. string, number, binary array, authorization token, public key associated to a private key;
-- A certificate shared over the trust domain;
-- Information pointing to the location of said information (e.g. in a database, external entity, distributed ledger);
-- Information associating the trust/security domain information to a trust level, e.g. string, number, binary array representing a quantitative (e.g. numeric) or qualitative (e.g. high, low) such that it can be compared whether different trust domains can be equivalently trusted and/or specific operations can be restricted to specific trust domains;
-- Validity information associated to the trust/security domain information such that the trust domain information is only valid under specific circumstances (e.g. for a given time period) and/or if validated by an external entity
-- Information derived from any of the above and/or combined with information related to the network element instance itself (e.g. adding it to its own certificate, signing it with its own private key).

Figure 4 schematically illustrates a communication diagram showing an exemplary communication between different network functions or services, the first access and mobility management function (AMF-A), the first session management function (SMF-A), the first policy and charging function (PCF-A), and the second policy and charging function (PCF-B), taking into account their respective trust or security domain 141', 142' and/or trust or security domain information.

Figure 4 especially shows an implementation or a possibility (for a second (specific) network entity) to apply authorization/security based on the requestee's (i.e. a first (specific) network entity's) trust domain. In a conventionally known implementation (i.e. based on a layered approach to security), the fact that a request (i.e. a control plane communication message of the first (specific) network entity) reached a network element (i.e. the second (specific) network entity) implies a given level of trust. That is, because limiting communications within a given trust domain is tasked to underlying layers (network layer 101).

Figure 4 shows different examples of such communication situations where the first specific network entity is transmitting a specific control plane communication message to a second specific network entity according to the present invention, and wherein the specific control plane communication message is received and verified by the second specific network entity, thereby realizing trust or security domain-based authorization being applied to signaling within a 5G System (5GS). The same exemplarily trust or security domains are used as exemplarily shown in Figure 3.

Figure 4 exemplarily shows the first access and mobility management function (AMF-A), the first session management function (SMF-A), the first policy and charging function (PCF-A), and the second policy and charging function (PCF-B). The first access and mobility management function (AMF-A), the first session management function (SMF-A), and the first policy and charging function (PCF-A) all belong to the first trust or security domain 141', for which a trust or security domain identifier information exists as well as credential information, and, typically, a common policy (regarding authorization). Furthermore, regarding each one of the network entities involved (or network functions or services AMF-A, SMF-A, PCF-A) corresponding (especially specific) identifier information and/or credential information are present at the respective network entity.

As the second policy and charging function (PCF-B) belong to the second trust or security domain 142', for which likewise a trust or security domain identifier information exists as well as credential information, and, typically, a common policy (regarding authorization). Furthermore, also regarding the second policy and charging function (PCF-B) corresponding (especially specific) identifier information and/or credential information is present at this network entity.

According to a first example of such a communication situation (where the first specific network entity is transmitting a specific control plane communication message to a second specific network entity) according to the present invention, in a first processing step 401, the first access and mobility management function AMF-A transmits a PDU session establishment (request) (as an example of a control plane communication message, and the first access and mobility management function AMF-A thereby acting as the first specific network entity according to the inventive method) to the first session management function SMF-A, this PDU session establishment (request) especially comprising the identifier/credential information related (or to be applied) to the first access and mobility management function AMF-A and/or to the first trust or security domain 141'. In a second processing step 402, the request is allowed, as a request coming from a network entity of the same trust domain (i.e. the first trust or security domain 141') is trusted by default, i.e. as part of the default or common policy of the first trust or security domain 141'. In a third processing step 403, a corresponding PDU session establishment result message (i.e. another control plane communication message) is transmitted, by the first session management function SMF-A (acting as the second specific network entity according to the inventive method), to the first access and mobility management function AMF-A.

According to a second example of such a communication situation (where the first specific network entity is transmitting a specific control plane communication message to a second specific network entity) according to the present invention, in a fourth processing step 404, the first session management function SMF-A transmits a session management (SM) policy establishing (request) (as another example of a control plane communication message, and the first session management function SMF-A thereby acting as the first specific network entity according to the inventive method) to the first policy and charging function PCF-A, this session management (SM) policy establishment (request) especially comprising the identifier/credential information related (or to be applied) to the first session management function SMF-A and/or to the first trust or security domain 141'. In a fifth processing step 405, the request is rejected as the session management function SMF-A is not allowed although belonging to the same (first) trust or security domain 141' (and despite the request coming from a network entity of the same trust domain, i.e. the first trust or security domain 141'), e.g. as part of a special rule or policy of the first trust or security domain 141'. In a sixth processing step 406, a corresponding session management (SM) policy establishment result message (i.e. another control plane communication message) is transmitted, by the first policy and charging function PCF-A (acting as the second specific network entity according to the inventive method), to the first session management function SMF-A.

According to a third example of such a communication situation (where the first specific network entity is transmitting a specific control plane communication message to a second specific network entity) according to the present invention, in a seventh processing step 407, the first policy and charging function PCF-A transmits a session management (SM) policy establishing (request) (as another example of a control plane communication message, and the first policy and charging function PCF-A thereby acting as the first specific network entity according to the inventive method) to the second policy and charging function PCF-B, this session management (SM) policy establishment (request) especially comprising the identifier/credential information related (or to be applied) to the first policy and charging function PCF-A and/or to the first trust or security domain 141'. In an eighth processing step 408, the request is rejected as the policy and charging function PCF-A is - as belonging to a different trust or security domain - not trusted. In a ninth processing step 409, a corresponding session management (SM) policy establishment result message (i.e. another control plane communication message) is transmitted, by the second policy and charging function PCF-B (acting as the second specific network entity according to the inventive method), to the first policy and charging function PCF-A.

Hence, these examples show that each network function (NF) - or network entity - is associated with (at least) one trust/security domain; additionally, individual identifiers (e.g. NF ID, network function or service identifier information) and/or credentials (e.g. a certificate for the given network function or service or network entity) are also able to be used. Based on a common trust domain policy associated with each network function or service within the trust domain, requests received including the trust domain identifier/credentials can be accepted (cf. the first example). However, the common trust domain policy can also be overridden by individual authorization settings (e.g. to authorize/deny a specific network function or service (despite being associated or part of the same trust or security domain)), cf. the second example. Similarly, requests originating from other trust domains can be rejected, cf. the third example.

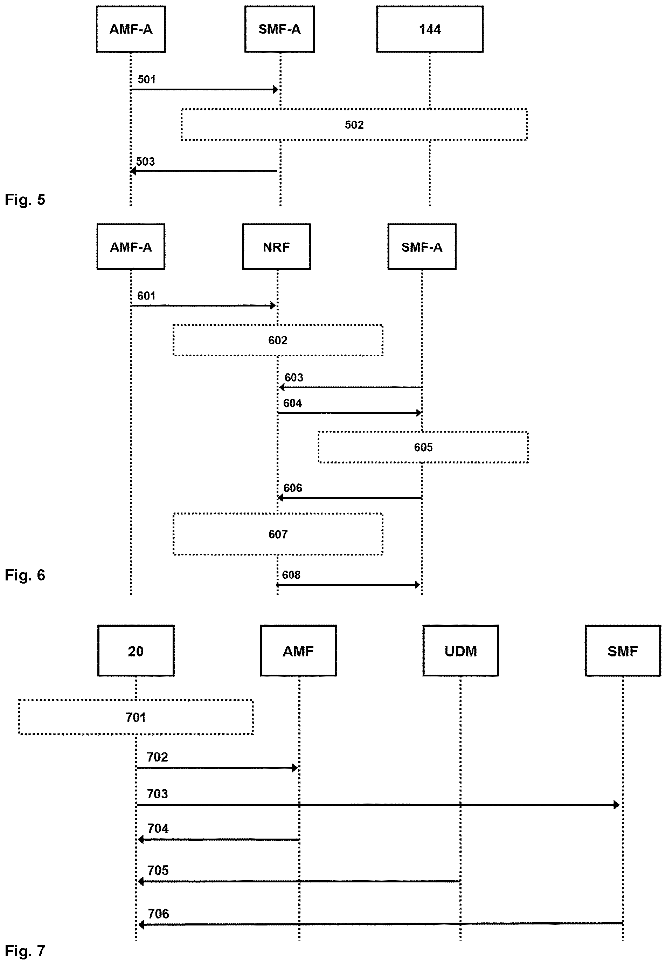

Figure 5 schematically illustrates a communication diagram showing an exemplary communication between different network functions or services taking into account their respective trust or security domain and/or trust or security domain information, wherein a trust or security domain controller entity 144 is involved. Figure 5 exemplarily shows the first access and mobility management function (AMF-A) and the first session management function (SMF-A) as well as the trust or security domain controller entity 144 performing the first and second step according to the inventive method wherein the trust or security domain controller entity 144 is used (or helps) performing the second step, regarding verifying the specific trust or security domain information:
The exemplarily situation shown in Figure 5 relates to the first example of Figure 4, i.e. to the communication between the first access and mobility management function AMF-A transmitting - in a first processing step 501 - a PDU session establishment (request) (as an example of a control plane communication message, and the first access and mobility management function AMF-A thereby acting as the first specific network entity according to the inventive method) to the first session management function SMF-A; the PDU session establishment (request) - only being meant as an example of a control plane communication message - especially comprises the identifier/credential information related (or to be applied) to the first access and mobility management function AMF-A and/or to the first trust or security domain 141'. In a second processing step 502, a verification of trust domain identifier/credential with the trust authority is performed, especially whether the requesting network function or service belongs to the stated trust domain (i.e. the first trust or security domain 141'). According to the verification variant exemplarily shown in Figure 5, for this verification step the trust or security domain controller entity 144 is involved (by the first session management function SMF-A). In case the request is allowed (as a request coming from a network entity of the same trust domain, i.e. the first trust or security domain 141', is typically trusted by default), in a third processing step 503, a corresponding PDU session establishment result message (i.e. another control plane communication message) is transmitted, by the first session management function SMF-A (acting as the second specific network entity according to the inventive method), to the first access and mobility management function AMF-A.

Especially, the trust domain credentials/identifiers can only be useful if the receiver end (the network function or service producer - in the present example the first session management function SMF-A, acting a second specific network entity) is able to verify that they are valid and authentic; here, this is done using (or involving) the trust or security domain controller entity 144. This typically applies:
-- For an incoming request including a trust domain identifier/credentials,
-- Before authorizing the service operation (e.g. PDU session establishment), the network function or service producer verifies:
   -- the validity and authenticity of the received trust domain identifier/credentials and/or
   -- whether the network function or service consumer (e.g. AMF-A, i.e. acting as the first specific network entity) is confirmed to belong to the trust domain; the network function or service producer can verify the authorization information sent by the network function or service consumer in any of the following ways:
      -- by sending the trust domain identifier/credentials to the trust domain controller (verification of their validity) (e.g. the trust domain credentials are a Oauth token based on the trust domain affiliations and the trust domain controller returns whether the token is authentic and the authorization scope (i.e. what it allows the NF service consumer to do)), or
      -- by sending the network function or service credentials and the trust domain identifier to the trust domain controller (verification of association of network function or service consumer to a specific trust domain) (e.g. the identity of the NF service consumer can be verified but the NF service producer needs to query whether that specific NF instance is part of the indicated trust domain);
      -- in case the information related to the trust domain included with the incoming request is verified to be authentic and the scope of the service request within the scope of the trust domain identifier/credential, the request is then authorized by the network function or service producer.

A similar mechanism can be applied if instead of a network function or service, the service consumer is a user equipment. It can be applied in general to network elements - i.e. network entities - within the telecommunications network.

Figure 6 schematically illustrates a communication diagram showing an exemplary communication between different network functions or services taking into account their respective trust or security domain and/or trust or security domain information, wherein a network repository function NRF is involved.

Figure 6 exemplarily shows an alternative variant of the verification step (of the second step according to the inventive method of the present invention) of the procedure of the first example shown in Figure 4 and the procedure shown in Figure 5, i.e. the first access and mobility management function (AMF-A) requesting a PDU session establishment (as an example of a control plane communication message, and the first access and mobility management function AMF-A thereby acting as the first specific network entity according to the inventive method) from the first session management function SMF-A (acting as the second specific network entity according to the inventive method); this procedure being an example of the first and second step according to the inventive method and involves (as part of the second step) a verification of the specific trust or security domain information (transmitted during the first step).

In order for the first session management function SMF-A (acting as second specific network entity) to be able to verify the specific trust or security domain information, the exemplarily situation shown in Figure 6 provides a variant involving the network repository function:
In a first processing step 601, the first access and mobility management function AMF-A transmits a registration of its network function or service profile to the network repository function NRF - this registration including an information regarding the trust or security domain associated to the network function or service instance (i.e. that the first access and mobility management function AMF-A belongs to the first trust or security domain 141').

In a second processing step 602, the network repository function NRF stores this association between the network function or service instance (especially by means of an identifier information ID of the respective network function or service, i.e. here the first access and mobility management function AMF-A) and the trust domain identifier, i.e. the trust or security domain information (or identifier information).

In a third processing step 603, the first session management function SMF-A retrieves the network function or service profile of the first access and mobility management function AMF-A by means of a corresponding request to the network repository function NRF, and in a fourth processing step 604, the network function or service profile of the first access and mobility management function AMF-A is transmitted to the first session management function SMF-A.

In a fifth processing step 605, the association between the first access and mobility management function AMF-A and the first trust or security domain 141' is able to be checked by the first session management function SMF-A.

Especially, it is possible for the first session management function SMF-A to verify the association of the first access and mobility management function AMF-A to the first trust or security domain 141' by means of, in a sixth processing step 606 transmitting a request, towards the network repository function NRF, to very whether the first access and mobility management function AMF-A belongs to the first trust or security domain 141'; in a seventh processing step 607, the network repository function NRF checks the association between the first access and mobility management function AMF-A and the first trust or security domain 141' based on the available network function or service profile information, and in an eighth processing step 608, the network repository function NRF provides the response to the first session management function SMF-A.

Hence, the network repository function NRF is able to act as trust or security domain controller entity (also designated by means of reference sign 144, cf. Figure 5).

In order to allow for visibility of trust domain information at the functional level, instead of being it provided by lower (e.g. network) layers, network elements can register their association to a given trust or security domain within the network so that:
-- It can be known (and verifiable) that this association exists so that network elements belonging to a given trust domain can be discovered
-- It can be queried whether specific network elements belong to a given trust domain.

Hence, a network function or service (in the example of Figure 6, this network function or service corresponds to the first access and mobility management function AMF-A) registers information regarding its functionality to the network repository function NRF and additionally includes the trust domain(s) it belongs to.

This information is stored in the network repository function NRF such that a network function or service retrieving a given network function or service profile (in the example of Figure 6, this retrieving network function or service corresponds to the first session management function SMF-A) can, on its own, assess whether the associated network function or service instance belongs to a given trust domain and/or also so that a trust domain identifier can be used as filter parameter to retrieve network function or service profiles.

Alternatively, a network function or service could also query the network repository function NRF whether a given network function or service instance belongs to a specific trust domain, whether that information is still valid and/or whether alternatives exist within a given or other trust domains.

Figure 7 schematically illustrates a communication diagram showing an exemplary communication between a user equipment 20 and different network functions or services wherein trust or security domain information stored in the user equipment is used for different procedures. The communication diagram of Figure 7 is between the user equipment 20 and the following network functions or services (of a typical telecommunications network 100): the access and mobility management function AMF, the unified data management UDM, and the session management function SMF.

In a first processing step 701, the trust domain identifier/credentials (i.e. especially the trust or security domain information) is stored in the user equipment 20. In this exemplary representation, the user equipment 20 serves as a network entity just as any other network function or service (of the core network 120) of the telecommunications network 100. In this case, the user equipment 20 acts as the first specific network entity, and the other network functions or services are acting as the second specific network entity according to the inventive method, i.e. these network functions or services are charged with conducting the verification step of the second step of the inventive method, this check being performed based on having received the trust or security domain information from the user equipment 20.

In a second processing step 702, the user equipment 20 (acting as first specific network entity) registers to the telecommunications network 100 (by means of a registration request, especially to the access and mobility management function AMF) including trust domain identifier/credentials, i.e. such trust or security domain information (and credential information) is provided by the user equipment 20.

In a third processing step 703, the user equipment 20 transmits a PDU session establishment request to the session management function SMF, likewise including trust domain identifier/credentials, i.e. such trust or security domain information (and credential information) is provided by the user equipment 20.

In a fourth processing step 704, the user equipment 20 receives, from the access and mobility management function AMF a UE Configuration Update (UCU), providing the possibility to update the user equipment trust domain identifier/credentials (within the user equipment 20).

In a fifth processing step 705, the user equipment 20 receives, from the unified data management UDM a UE Parameter Update (UPU), providing the possibility to update the user equipment trust domain identifier/credentials (within the user equipment 20).

In a sixth processing step 706, the user equipment 20 receives, from the session management function SMF a protocol configuration options (PCO) information or extended protocol configuration options (ePCO) information, providing the possibility to update the user equipment trust domain identifier/credentials (within the user equipment 20).

It is to be understood that the fourth, fifth and sixth processing steps 704, 705, 706 are especially alternative possibilities to provide the user equipment 20 with the required information.

Hence, by means of storing trust domain information in the user equipment 20, it is advantageously possible to apply the association of a network element (or network entity) to a trust domain also to user equipments (i.e. mobile devices, mobile stations). In user equipments or mobile stations, information related to credentials, identities or configuration parameters can be sent by the network to the user equipment in a variety of ways.

The objective is to enable that a user equipment 20 contains an association with a given trust domain. The trust domain information can thus be included in UE-related system procedures such as network registration and/or PDU session establishment.

Updating of trust domain information in the UE can thus be realized by enhancing current means such as UE Configuration Update (UCU), UE Parameter Update (UPU), Protocol Configuration Options (PCO) or extended Protocol Configuration Options (ePCO), such that a secure and reliable transmission of the configuration can be realized and the data stored securely in either the UE or an associated SIM module (or universal integrated circuit card).

Figure 8 schematically illustrates a communication diagram showing an exemplary communication between a user equipment 20 and different base station entities wherein trust or security domain information is used for network selection. More specifically, the communication diagram of Figure 8 represents the communication of the user equipment 20 with a first base station entity 111 (or gNB-A) and with a second base station entity 112 (or gNB-B).

It is assumed that the user equipment 20 comprises a trust domain identifier, i.e. a trust or security domain information associated with the first trust or security domain 141', and is associated to a specific telecommunications network (i.e. having or being assigned to a (specific) public land mobile network identifier information, PLMN ID A). Likewise, the first base station entity 111 comprises a trust domain identifier, i.e. a trust or security domain information relating to the first trust or security domain 141', and is associated or assigned to the public land mobile network identifier information, PLMN ID A). The second base station entity 112 likewise comprises a trust domain identifier, i.e. a trust or security domain information, but relating to the second trust or security domain 142', and also the second base station entity 112 is associated or assigned to the public land mobile network identifier information, PLMN ID A.

In a first processing step 801, the first base station entity 111 broadcasts its associated trust domain identifier and its public land mobile network identifier information, i.e. the trust or security domain information relating to the first trust or security domain 141', and the public land mobile network identifier information (PLMN ID A).

In a second processing step 802, the second base station entity 112 broadcasts its associated trust domain identifier and its public land mobile network identifier information, i.e. the trust or security domain information relating to the second trust or security domain 142', and the public land mobile network identifier information (PLMN ID A).

In a third processing step 803, the user equipment 20 performs network selection based on the trust domain identifier (i.e. the trust or security domain information received in the first and second processing steps 801, 802, and based on the public land mobile network identifier information (i.e. PLMN ID A).

As a consequence, in a fourth processing step 804, the user equipment 20 registers to the telecommunications network 100 - including the trust domain identifier/credentials - via the first base station entity 111 (instead of via the second base station entity 112), as both the user equipment 20 and the first base station entity 111 are associated to the first trust or security domain 141' rather than to the second trust or security domain 142'. Hence, the use of trust or security domain information is beneficially applicable for network selection of user equipments.

After both the user equipment 20 and one or more radio access network nodes (e.g. gNodeBs in a 5G system) are associated with a given trust domain, in the first and second processing steps 801, 802, the base station entities (typically gNBs) can broadcast a given trust domain complementary to already existing broadcast information such as network identifier (e.g. PLMN ID), and this information can thus be taken into account by the user equipment 20 (e.g. based on PLMN ID A and the first trust or security domain 141', the first base station entity 111 is selected, resulting in a network registration/attach via the first base station entity 111.

Figure 9 schematically illustrates a communication diagram showing an exemplary communication between a user equipment and different network functions or services, namely the access and mobility management function AMF and the network slice selection function NSSF, wherein trust or security domain information is used for an association of the trust or security domain and the network slice.

The deployment of network slices in different administrative domains is advantageously possible according to the present invention.

In conventionally known telecommunications networks, there is no distinction on whether network elements (network functions or services) serving different network slices belong to the same trust domain, such trust or security domains are, for practical purposes, often associated to a different administrative domain (i.e. "under whose responsibility a given network element is"). I.e., in an exemplary scenario, a telecommunications network 100 could comprise two trust or security domains (trust or security domain A and trust or security domain B, potentially administered by different stakeholders), wherein a network slice X and a further network slice Y might be part of trust or security domain A, whereas a still further network slice Z might be part of trust or security domain B.

An important aspect that ensures that a network can be correctly sliced is the association between a slice and an access and mobility management function AMF (tasked with access and mobility in the 5GS).

So that other network functions or services within the 5G core can be aware of the association between trust domain and network slice, both information components are associated so that especially in the case of user equipment registration, the trust domain association can be considered when accepting/rejecting a user equipment slice request.

In a first processing step 901, the association between network slice X and trust or security domain A, and the association between network slice Z and trust or security domain B is stored in the network slice selection function NSSF.

In a second processing step 902, the initial user equipment message or Uplink NAS Transport message, including requested slices X+Z, and the indication of trust or security domain A is transmitted by the user equipment 20 towards the access and mobility management function AMF.

In a third processing step 903, the access and mobility management function AMF transmits a Nnssf NSSelection_Get message towards the network slice selection function NSSF, and in a fourth processing step 904, the network slice selection function NSSF transmits a Nnssf_NSSelection_Get response back to the access and mobility management function AMF.

In fifth processing step 905, the access and mobility management function AMF accepts the network slice X request, but rejects network slice Z request based on user equipment 20 belonging to trust or security domain A (instead of trust or security domain B that is associated with network slice Z).

In a sixth processing step 906, the access and mobility management function AMF transmits a corresponding message to the user equipment 20 (indicating acceptance of network slice X request and rejection of network slice Z).

Hence, the association is stored in the network slice selection function (NSSF), which is queried by the access and mobility management function AMF as part of the network registration (cf. clause 4.2.2.2.3 of TS 23.502). It can also be applied to slice-level authentication. A user equipment registration including requesting slices and associated to the trust domain of the user equipment 20 results in, the access and mobility management function AMF checking the network slice selection function NSSF for the trust domain association of the network slice (i.e. all of the network elements in the network slice are thus included in the given trust domain).

Based on the trust domain the user equipment belongs to, it can reject requested network slices to which connectivity should be restricted because they are in another trust domain.

These mechanisms allow for a further separation allowing different administrative entities controlling different network slices. It is just not possible for network elements from slices of different trust domains to communicate (they would reject all communication attempts).

According to the present invention, it is furthermore advantageously possible that the trust domain identifier is integrated into the slice ID (e.g. SST/SD and additionally TDI (Trust Domain ID).

## Claims

1. Method for operating a user equipment (20) with a telecommunications network (100) and/or for communicating between or for operating at least two of a plurality of network functions or services (140) of the telecommunications network (100) or of a further telecommunications network (200), wherein control plane communication messages - exchanged between such different network entities of or connected to the telecommunications network (100) or of or connected to the further telecommunications network (200) - comprise a trust or security domain information,
wherein the telecommunications network (100) and/or the further telecommunications network (200) comprises or realizes at least a first and a second trust or security domain (141', 142') by means of
-- a first subset (141) of the network entities (140), this first subset (141) being associated or assigned to the first trust or security domain (141'), and by means of
-- a second subset (142) of the network entities (140), this second subset being associated or assigned to the second trust or security domain (142'), wherein in case of a first specific network entity transmitting a specific control plane communication message to a second specific network entity, the method comprises the following steps:
-- in a first step, the specific control plane communication message is transmitted, by the first specific network entity, wherein the specific control plane communication message comprises a specific trust or security domain information, the specific trust or security domain information being related to the specific trust or security domain to which the first specific network entity is associated or assigned,
-- in a second step, the specific control plane communication message is received, by the second specific network entity, wherein the specific trust or security domain information is verified by the second specific network entity.

2. Method according to claim 1, wherein the specific control plane communication message comprises the trust or security domain information on a functional layer, especially in a manner such that the trust or security domain information is visible among the different network entities of or connected to the telecommunications network (100) or of or connected to the further telecommunications network (200),
wherein especially the trust or security domain separation of the first subset (141) of the network entities (140) - of the first trust or security domain (141') - and of the second subset (142) of the network entities (140) - of the second trust or security domain (142') - is visible at the functional level such that the network entities (140) involved are aware of the trust or security domain (141', 142') the respective other network entity belongs to,
wherein especially the trust or security domain information is used in such a manner instead of in a separated layer managed on a network layer of the telecommunications network (100) or of the further telecommunications network (200).

3. Method according to one of the preceding claims, wherein regarding the specific trust or security domain information - of or as part of the specific control plane communication message transmitted by the first specific network entity - at least one of the following applies:
-- the specific trust or security domain information comprises or corresponds to authentication information and/or authorization information, especially using oauth token information, http header information, the message payload,
-- the specific trust or security domain information comprises or corresponds to a common trust or security domain identifier information, especially a string, a number, a binary array, an authorization token, a public key information associated to a private key information,
-- the specific trust or security domain information comprises or corresponds to a certificate or information derived of a certificate, shared over the trust or security domain (141', 142'),
-- the specific trust or security domain information comprises or corresponds to an information pointing to the location of the actual authentication information and/or authorization information, especially in a database and/or repository, located in an external entity and/or in a distributed ledger,
-- the specific trust or security domain information comprises or corresponds to information related to the first specific network entity itself, especially its own certificate and/or signing it with its own private key,
-- the specific trust or security domain information is part of or is integrated into a network slice identifier information.

4. Method according to one of the preceding claims, wherein the verification, in the second step and by the second specific network entity, of the specific trust or security domain information involves at least one out of the following:
-- a general verification policy or general authorization settings applied within the trust or security domain (141', 142') of the second specific network entity,
-- a specific verification policy or specific authorization settings applied by the second specific network entity, the specific verification policy or specific or authorization settings being different from the general verification policy applied within the trust or security domain (141', 142') of the second specific network entity,
-- a communication of the second specific network entity with a specific trust or security domain controller entity of the trust or security domain (141', 142') of the second specific network entity, wherein the specific trust or security domain controller entity verifies the validity and authenticity of the specific trust or security domain information, wherein especially the specific trust or security domain controller entity verifies the validity of the specific trust or security domain information and/or wherein especially the specific trust or security domain controller entity verifies the association of the first specific network entity to a specific trust domain.

5. Method according to one of the preceding claims, wherein the specific control plane communication message corresponds to a service request message being transmitted - during the first step - by the first specific network entity acting as a service consumer network entity and received - during the second step - by the second specific network entity acting as a service provider network entity.

6. Method according to one of the preceding claims, wherein the specific control plane communication message transmitted - during the first step - by the first specific network entity corresponds to a registration message and wherein the specific control plane communication message received - during the second step - by the second specific network entity corresponds to a retrieving message, the registration message being transmitted, by the first specific network entity, towards a trust or security domain controller entity, and the retrieving message being received, by the second specific network entity, from the trust or security domain controller entity,
wherein especially the trust or security domain controller entity is or
corresponds to a network repository function, wherein the network repository function stores an association between the first specific network entity and a trust or security domain (141', 142') or a trust or security domain identifier information.

7. Method according to one of the preceding claims, wherein the first specific network entity is or corresponds to a user equipment (20) or mobile station and wherein the second specific network entity is or corresponds to a network function or service of the telecommunications network (100) or of the further telecommunications network (200), or wherein the second specific network entity is or corresponds to a user equipment (20) or mobile station and wherein the first specific network entity is or corresponds to a network function or service of the telecommunications network (100) or of the further telecommunications network (200), or wherein the first specific network entity is or corresponds to a network function or service of the telecommunications network (100) or of the further telecommunications network (200) and wherein the second specific network entity is or corresponds to a further network function or service of the telecommunications network (100) or of the further telecommunications network (200),
wherein especially the specific trust or security domain information is stored in the user equipment (20) or mobile station, used as the first specific network entity, wherein the specific trust or security domain information is used in order for the telecommunications network (100) or the further telecommunications network (200) providing communication services to the user equipment (20) or mobile station,
wherein especially the specific trust or security domain information is used, by the user equipment (20) or mobile station,
-- during a registration procedure of the user equipment (20) or mobile station with the telecommunications network (100) or the further telecommunications network (200), especially towards an access and mobility management function serving as second specific network entity, and/or
-- during a packet data unit session establishment procedure of the user equipment (20) or mobile station with the telecommunications network (100) or the further telecommunications network (200), especially towards a session management function serving as second specific network entity, and/or
-- during a traffic flow establishment procedure - in view of serving the user equipment (20) or mobile station and especially a GTP-U tunnel establishment procedure - of a first network function or service and a second network function or service, especially between two session management functions instructing two or more a user plane functions to setup a GTP-U tunnel, and/or towards a session management function serving as second specific network entity, and/or
-- during a network selection procedure of the user equipment (20) or mobile station with a specific base station entity of the telecommunications network (100) or the further telecommunications network (200), the specific base station entity serving as second specific network entity and/or
-- during a network slice selection or association procedure of the user equipment (20) or mobile station with a specific access and mobility management function regarding a network slice, the specific access and mobility management function serving as second specific network entity.

8. Method according to one of the preceding claims, wherein the specific control plane communication message additionally contains trust level information, wherein:
-- the general verification policy or general authorization settings additionally considers the trust level information, and/or
-- the specific verification policy or specific authorization settings additionally considers the trust level information, and/or
-- the communication of the second specific network entity with a specific trust or security domain controller entity additionally considers the trust level information.

9. User equipment (20) or mobile station for being operated with a telecommunications network (100) and/or for communicating between or for operating at least two of a plurality of network functions or services (140) of the telecommunications network (100) or of a further telecommunications network (200), wherein control plane communication messages - exchanged between such different network entities of or connected to the telecommunications network (100) or of or connected to the further telecommunications network (200) - comprise a trust or security domain information,
wherein the telecommunications network (100) and/or the further telecommunications network (200) comprises or realizes at least a first and a second trust or security domain (141', 142') by means of
-- a first subset (141) of the network entities (140), this first subset (141) being associated or assigned to the first trust or security domain (141'), and by means of
-- a second subset (142) of the network entities (140), this second subset (142) being associated or assigned to the second trust or security domain (142'),
wherein in case of the user equipment (20) or mobile station being used as a first or second specific network entity, the first specific network entity transmitting a specific control plane communication message to the second specific network entity, the user equipment (20) or mobile station is configured such that:
-- the specific control plane communication message is transmitted, by the first specific network entity, wherein the specific control plane communication message comprises a specific trust or security domain information, the specific trust or security domain information being related to the specific trust or security domain (141', 142') to which the first specific network entity is associated or assigned,
-- the specific control plane communication message is received, by the second specific network entity, wherein the specific trust or security domain information is verified by the second specific network entity.

10. System or telecommunications network (100) for operating a user equipment (20) with the telecommunications network (100) and/or for communicating between or for operating at least two of a plurality of network functions or services (140) of the telecommunications network (100) or of a further telecommunications network (200), wherein control plane communication messages - exchanged between such different network entities of or connected to the telecommunications network (100) or of or connected to the further telecommunications network (200) - comprise a trust or security domain information,
wherein the telecommunications network (100) and/or the further telecommunications network (200) comprises or realizes at least a first and a second trust or security domain (141', 142') by means of
-- a first subset (141) of the network entities (140), this first subset (141) being associated or assigned to the first trust or security domain (141'), and by means of
-- a second subset (142) of the network entities (140), this second subset (142) being associated or assigned to the second trust or security domain (142'),
wherein in case of a first specific network entity transmitting a specific control plane communication message to a second specific network entity, the system or telecommunications network (100) is configured such that:
-- the specific control plane communication message is transmitted, by the first specific network entity, wherein the specific control plane communication message comprises a specific trust or security domain information, the specific trust or security domain information being related to the specific trust or security domain (141', 142') to which the first specific network entity is associated or assigned,
-- the specific control plane communication message is received, by the second specific network entity, wherein the specific trust or security domain information is verified by the second specific network entity.

11. Network entity being used as a first or second specific network entity of a system or telecommunications network (100) according to claim 10 or as a first or second specific network entity in a method according to one of claims 1 to 8.

12. Program comprising a computer readable program code which, when executed on a computer and/or on a user equipment (20) and/or on a first specific network entity of a telecommunications network (100) and/or on a second specific network entity of a telecommunications network (100), or in part on the user equipment (20) and/or in part on a first specific network entity of a telecommunications network (100) and/or in part on a second specific network entity of a telecommunications network (100), causes the computer and/or the user equipment (20) and/or the first specific network entity of the telecommunications network (100) and/or the second specific network entity of the telecommunications network (100) to perform a method according one of claims 1 to 8.

13. Computer-readable medium comprising instructions which when executed on a computer and/or on a user equipment (20) and/or on a first specific network entity of a telecommunications network (100) and/or on a second specific network entity of a telecommunications network (100), or in part on the user equipment (20) and/or in part on a first specific network entity of a telecommunications network (100) and/or in part on a second specific network entity of a telecommunications network (100), causes the computer and/or the user equipment (20) and/or the first specific network entity of the telecommunications network (100) and/or the second specific network entity of the telecommunications network (100) to perform a method according one of claims 1 to 8.

## Amended claims

### Amended claims in accordance with Rule 137(2) EPC.

1. Method for operating a user equipment (20) with a telecommunications network (100) and/or for communicating between or for operating at least two of a plurality of network functions or services (140) of the telecommunications network (100) or of a further telecommunications network (200), wherein control plane communication messages - exchanged between such different network entities of or connected to the telecommunications network (100) or of or connected to the further telecommunications network (200) - comprise a trust or security domain information,
wherein the telecommunications network (100) and/or the further telecommunications network (200) comprises or realizes at least a first and a second trust or security domain (141', 142') by means of
-- a first subset (141) of the network entities (140), this first subset (141) being associated or assigned to the first trust or security domain (141'), and by means of
-- a second subset (142) of the network entities (140), this second subset being associated or assigned to the second trust or security domain (142'),
wherein in case of a first specific network entity transmitting a specific control plane communication message to a second specific network entity, the method comprises the following steps:
-- in a first step, the specific control plane communication message is transmitted, by the first specific network entity, wherein the specific control plane communication message comprises a specific trust or security domain information, the specific trust or security domain information being related to the specific trust or security domain to which the first specific network entity is associated or assigned,
-- in a second step, the specific control plane communication message is received, by the second specific network entity, wherein the specific trust or security domain information is verified by the second specific network entity, wherein the specific control plane communication message comprises the trust or security domain information on a functional layer, especially in a manner such that the trust or security domain information is visible among the different network entities of or connected to the telecommunications network (100) or of or connected to the further telecommunications network (200),
wherein especially the trust or security domain separation of the first subset (141) of the network entities (140) - of the first trust or security domain (141') - and of the second subset (142) of the network entities (140) - of the second trust or security domain (142') - is visible at the functional level such that the network entities (140) involved are aware of the trust or security domain (141', 142') the respective other network entity belongs to,
wherein especially the trust or security domain information is used in such a manner instead of in a separated layer managed on a network layer of the telecommunications network (100) or of the further telecommunications network (200).

2. Method according to one of the preceding claims, wherein regarding the specific trust or security domain information - of or as part of the specific control plane communication message transmitted by the first specific network entity - at least one of the following applies:
-- the specific trust or security domain information comprises or corresponds to authentication information and/or authorization information, especially using oauth token information, http header information, the message payload,
-- the specific trust or security domain information comprises or corresponds to a common trust or security domain identifier information, especially a string, a number, a binary array, an authorization token, a public key information associated to a private key information,
-- the specific trust or security domain information comprises or corresponds to a certificate or information derived of a certificate, shared over the trust or security domain (141', 142'),
-- the specific trust or security domain information comprises or corresponds to an information pointing to the location of the actual authentication information and/or authorization information, especially in a database and/or repository, located in an external entity and/or in a distributed ledger,
-- the specific trust or security domain information comprises or corresponds to information related to the first specific network entity itself, especially its own certificate and/or signing it with its own private key,
-- the specific trust or security domain information is part of or is integrated into a network slice identifier information.

3. Method according to one of the preceding claims, wherein the verification, in the second step and by the second specific network entity, of the specific trust or security domain information involves at least one out of the following:
-- a general verification policy or general authorization settings applied within the trust or security domain (141', 142') of the second specific network entity,
-- a specific verification policy or specific authorization settings applied by the second specific network entity, the specific verification policy or specific or authorization settings being different from the general verification policy applied within the trust or security domain (141', 142') of the second specific network entity,
-- a communication of the second specific network entity with a specific trust or security domain controller entity of the trust or security domain (141', 142') of the second specific network entity, wherein the specific trust or security domain controller entity verifies the validity and authenticity of the specific trust or security domain information, wherein especially the specific trust or security domain controller entity verifies the validity of the specific trust or security domain information and/or wherein especially the specific trust or security domain controller entity verifies the association of the first specific network entity to a specific trust domain.

4. Method according to one of the preceding claims, wherein the specific control plane communication message corresponds to a service request message being transmitted - during the first step - by the first specific network entity acting as a service consumer network entity and received - during the second step - by the second specific network entity acting as a service provider network entity.

5. Method according to one of the preceding claims, wherein the specific control plane communication message transmitted - during the first step - by the first specific network entity corresponds to a registration message and wherein the specific control plane communication message received - during the second step - by the second specific network entity corresponds to a retrieving message, the registration message being transmitted, by the first specific network entity, towards a trust or security domain controller entity, and the retrieving message being received, by the second specific network entity, from the trust or security domain controller entity,
wherein especially the trust or security domain controller entity is or corresponds to a network repository function, wherein the network repository function stores an association between the first specific network entity and a trust or security domain (141', 142') or a trust or security domain identifier information.

6. Method according to one of the preceding claims, wherein the first specific network entity is or corresponds to a user equipment (20) or mobile station and wherein the second specific network entity is or corresponds to a network function or service of the telecommunications network (100) or of the further telecommunications network (200), or wherein the second specific network entity is or corresponds to a user equipment (20) or mobile station and wherein the first specific network entity is or corresponds to a network function or service of the telecommunications network (100) or of the further telecommunications network (200), or wherein the first specific network entity is or corresponds to a network function or service of the telecommunications network (100) or of the further telecommunications network (200) and wherein the second specific network entity is or corresponds to a further network function or service of the telecommunications network (100) or of the further telecommunications network (200),
wherein especially the specific trust or security domain information is stored in the user equipment (20) or mobile station, used as the first specific network entity, wherein the specific trust or security domain information is used in order for the telecommunications network (100) or the further telecommunications network (200) providing communication services to the user equipment (20) or mobile station,
wherein especially the specific trust or security domain information is used, by the user equipment (20) or mobile station,
-- during a registration procedure of the user equipment (20) or mobile station with the telecommunications network (100) or the further telecommunications network (200), especially towards an access and mobility management function serving as second specific network entity, and/or
-- during a packet data unit session establishment procedure of the user equipment (20) or mobile station with the telecommunications network (100) or the further telecommunications network (200), especially towards a session management function serving as second specific network entity, and/or
-- during a traffic flow establishment procedure - in view of serving the user equipment (20) or mobile station and especially a GTP-U tunnel establishment procedure - of a first network function or service and a second network function or service, especially between two session management functions instructing two or more a user plane functions to setup a GTP-U tunnel, and/or towards a session management function serving as second specific network entity, and/or
-- during a network selection procedure of the user equipment (20) or mobile station with a specific base station entity of the telecommunications network (100) or the further telecommunications network (200), the specific base station entity serving as second specific network entity and/or
-- during a network slice selection or association procedure of the user equipment (20) or mobile station with a specific access and mobility management function regarding a network slice, the specific access and mobility management function serving as second specific network entity.

7. Method according to one of the preceding claims, wherein the specific control plane communication message additionally contains trust level information, wherein:
-- the general verification policy or general authorization settings additionally considers the trust level information, and/or
-- the specific verification policy or specific authorization settings additionally considers the trust level information, and/or
-- the communication of the second specific network entity with a specific trust or security domain controller entity additionally considers the trust level information.

8. User equipment (20) or mobile station for being operated with a telecommunications network (100) and/or for communicating between or for operating at least two of a plurality of network functions or services (140) of the telecommunications network (100) or of a further telecommunications network (200), wherein control plane communication messages - exchanged between such different network entities of or connected to the telecommunications network (100) or of or connected to the further telecommunications network (200) - comprise a trust or security domain information,
wherein the telecommunications network (100) and/or the further telecommunications network (200) comprises or realizes at least a first and a second trust or security domain (141', 142') by means of
-- a first subset (141) of the network entities (140), this first subset (141) being associated or assigned to the first trust or security domain (141'), and by means of
-- a second subset (142) of the network entities (140), this second subset (142) being associated or assigned to the second trust or security domain (142'), wherein in case of the user equipment (20) or mobile station being used as a first or second specific network entity, the first specific network entity transmitting a specific control plane communication message to the second specific network entity, the user equipment (20) or mobile station is configured such that:
-- the specific control plane communication message is transmitted, by the first specific network entity, wherein the specific control plane communication message comprises a specific trust or security domain information, the specific trust or security domain information being related to the specific trust or security domain (141', 142') to which the first specific network entity is associated or assigned,
-- the specific control plane communication message is received, by the second specific network entity, wherein the specific trust or security domain information is verified by the second specific network entity, wherein the specific control plane communication message comprises the trust or security domain information on a functional layer, especially in a manner such that the trust or security domain information is visible among the different network entities of or connected to the telecommunications network (100) or of or connected to the further telecommunications network (200),
wherein especially the trust or security domain separation of the first subset (141) of the network entities (140) - of the first trust or security domain (141') - and of the second subset (142) of the network entities (140) - of the second trust or security domain (142') - is visible at the functional level such that the network entities (140) involved are aware of the trust or security domain (141', 142') the respective other network entity belongs to,
wherein especially the trust or security domain information is used in such a manner instead of in a separated layer managed on a network layer of the telecommunications network (100) or of the further telecommunications network (200).

9. System or telecommunications network (100) for operating a user equipment (20) with the telecommunications network (100) and/or for communicating between or for operating at least two of a plurality of network functions or services (140) of the telecommunications network (100) or of a further telecommunications network (200), wherein control plane communication messages - exchanged between such different network entities of or connected to the telecommunications network (100) or of or connected to the further telecommunications network (200) - comprise a trust or security domain information,
wherein the telecommunications network (100) and/or the further telecommunications network (200) comprises or realizes at least a first and a second trust or security domain (141', 142') by means of
-- a first subset (141) of the network entities (140), this first subset (141) being associated or assigned to the first trust or security domain (141'), and by means of
-- a second subset (142) of the network entities (140), this second subset (142) being associated or assigned to the second trust or security domain (142'), wherein in case of a first specific network entity transmitting a specific control plane communication message to a second specific network entity, the system or telecommunications network (100) is configured such that:
-- the specific control plane communication message is transmitted, by the first specific network entity, wherein the specific control plane communication message comprises a specific trust or security domain information, the specific trust or security domain information being related to the specific trust or security domain (141', 142') to which the first specific network entity is associated or assigned,
-- the specific control plane communication message is received, by the second specific network entity, wherein the specific trust or security domain information is verified by the second specific network entity, wherein the specific control plane communication message comprises the trust or security domain information on a functional layer, especially in a manner such that the trust or security domain information is visible among the different network entities of or connected to the telecommunications network (100) or of or connected to the further telecommunications network (200),
wherein especially the trust or security domain separation of the first subset (141) of the network entities (140) - of the first trust or security domain (141') - and of the second subset (142) of the network entities (140) - of the second trust or security domain (142') - is visible at the functional level such that the network entities (140) involved are aware of the trust or security domain (141', 142') the respective other network entity belongs to,
wherein especially the trust or security domain information is used in such a manner instead of in a separated layer managed on a network layer of the telecommunications network (100) or of the further telecommunications network (200).

10. Network entity being used as a first or second specific network entity of a system or telecommunications network (100) according to claim 10 or as a first or second specific network entity in a method according to one of claims 1 to 7.

11. Program comprising a computer readable program code which, when executed on a computer and/or on a user equipment (20) and/or on a first specific network entity of a telecommunications network (100) and/or on a second specific network entity of a telecommunications network (100), or in part on the user equipment (20) and/or in part on a first specific network entity of a telecommunications network (100) and/or in part on a second specific network entity of a telecommunications network (100), causes the computer and/or the user equipment (20) and/or the first specific network entity of the telecommunications network (100) and/or the second specific network entity of the telecommunications network (100) to perform a method according one of claims 1 to 7.

12. Computer-readable medium comprising instructions which when executed on a computer and/or on a user equipment (20) and/or on a first specific network entity of a telecommunications network (100) and/or on a second specific network entity of a telecommunications network (100), or in part on the user equipment (20) and/or in part on a first specific network entity of a telecommunications network (100) and/or in part on a second specific network entity of a telecommunications network (100), causes the computer and/or the user equipment (20) and/or the first specific network entity of the telecommunications network (100) and/or the second specific network entity of the telecommunications network (100) to perform a method according one of claims 1 to 7.
